# EUROPEAN PATENT SPECIFICATION

(11) **EP 0 423 294 B1**
(45) Date of publication and mention of the grant of the patent: **18.06.1997**
(21) Application number: 90907064.1
(22) Date of filing: 10.04.1990
(51) Int. Cl.: G01N 31/10, B01J 35/00

(54) **COMPUTERIZED UNIT FOR THE STUDY AND EVALUATION OF FCC CATALYSTS**
AUTOMATISCHE EINHEIT FÜR DIE UNTERSUCHUNG UND BEWERTUNG VON WIRBELSCHICHT-CRACK-KATALYSATOREN
UNITE INFORMATISEE POUR L'ETUDE ET L'EVALUATION DE CATALYSEURS DE CFC

(30) Priority: 13.04.1989 ES 8901303
(43) Date of publication of application: 24.04.1991
(73) Proprietor: CONSEJO SUPERIOR DE INVESTIGACIONES CIENTIFICAS, E-28006 Madrid (ES)
(72) Inventor: CORMA, Avelino Inst.de Catálisis y Petroleoquimica, Cientificas Serrano 119 E-28006 Madrid (ES); MELO, Francisco Inst. de Catálisis y Petroleoquimi, icas Serrano, 119 E-28006 Madrid (ES); PRIETO, José Inst.de Catálisis y Petroleoquimica, s Serrano, 119 E-28006 Madrid (ES)
(74) Representative: Ungria Lopez, Javier
(86) International application number: ES9000012
(87) International publication number: WO9012317

(56) References cited:
- EP-A- 0 206 905
- FR-A- 1 464 867
- FR-A- 2 541 594
- US-A- 4 099 923
- Ind. Eng. Chem. Process Des. Develop., Vol. 10, No. 1, 1971, N.Y. CHEN et al.: "A Microcatalytic System for Gas Oil Cracking", pages 71-74
- Revue de Physique Appliquée, Volumen 11, September 1976, M. FORISSIER et al.: "Automatisation des Mesures Cinétiques en Dynamique dans le cas de la Réaction Catalytique Gaz-Solide d'Oxydation Ménagée du Propène", pages 639-646
- 1987 Annual Book of ASTM Standards, Vol. 05-03, 1987, ASTM D 3907-86, ASTM, (Philadelphia, US), "Standard Method for Testing Fluid Cracking Catalysts by Microactivity Test", pages 661-668
- Ind. Eng. Chem., Prod. Res. Dev., Vol. 16, No. 3, 1977,N.Y. CHEN et al.: "An Automated Microcatalytic System for Gas Oil Cracking", pages 242-243

## Description

After the introduction of CFC processes in the 40's, the need was generally felt to test catalysts prior to their commercial application in order to select the most adequate one. The requirements to be complied with by a CFC catalyst test are the following : Simplicity, reproducibility and a good correlation to real world data. Accordingly, the Mobil Oil R&D team proposed a test (P.B. Weisz and J.N. Miele, J. Catal., 4, 527, 1965). In this test the cracking rate of n-hexane on a certain catalyst is compared to the cracking rate of a silica-alumina reference catalyst.

With the advent of zeolytic catalysts, this method proved to be no longer adequate to determine the activity of commercial catalysts. Several other tests were applied in the assessment of the new catalysts, always tailored to the need of using short reaction times and small amounts of catalyst (J. Alexander, Proc. API 27, III, 51, 1947). Thus the microactivity cracking test (MAT) was developed, where 1 ml of gas oil was treated with spatial rates between 0.2 and 5 minutes (F.G. Ciapetta and D.S. Henderson Oil Gas J., October 16, 88, 1967). This test was subsequently modified reducing the feed time (A. Montgomery and W.S.Letzsch, Oil Gas J., November 22, 60, 1971). Another version of the same microactivity test (N.Y. Chen and S.J. Lucki, Ind. Eng. Chem. P.D.D., 10,71,1971) uses feeds as of 0.1 ml and allows for manual and in situ performance of reaction-regeneration cycles.

In view of the interest and the economic relevance of this issue, the ASTM Committee developed a MAT unit according to ASTM standard D-3907. In this standard the experimental conditions are specified, as well as the design characteristics of the reactor, the furnace, the feeder and the receiver. Generally speaking, a vast majority of catalyst manufacturing and testing laboratories build these units in conformity with ASTM-D3907 with regard to the design of the unit, although they may introduce devices to adapt the unit to the respective operating conditions (R.J. Campagna et al., Oil Gas J., March 24, 88, 1986).

US-A-4 099 923 discloses an automatic catalyst screening unit with a reactor module defining a plurality of reaction chambers, for analysing a plurality of potential catalysts.

In all the systems described in the literature the assays are carried out either manually or automatically. In this latter case, however, the assistance of the operator is required to conduct a second assay (N.Y. Chen et al., Ind. Eng. Chem. P.R.D. 16, 242,1977). Hence to our knowleadge, there do not exist any MAT units as described above which would allow for sequential and pre-programmed runs of several assays under different operating conditions : temperature, reaction and regeneration time, catalyst / feed ratio and partial feed pressure.

It is the purpose of this invention to provide a MAT-type Catalyst unit for the study of catalyst activity and selectivity incorporating a totally computerized catalytic cracking device which allows to conduct predesigned experimental series, including analysis of the reaction products.

The catalytic unit as claimed, permits to implement continuos experimental cycles (purging-reaction-purging-regeneration) including reaction gas analysis, total carbon, H/C ratio in the catalyst, as well as collection of reaction liquors in a totally automatic manner, thus making the aid of an operator unnecessary. In addition, this catalytic unit allows for a wide range of operating and experimental conditions requiring minimal feedstock amounts and short reaction times maintaining material balances above 95 %.

According to a prefered embodiment, the unit comprises a reactor made of glass, quartz, steel, ceramic material or any other material, which allows for operation above 400^{º}C. Among these materials, steel is to be preferred. The dimensions and other characteristics of the reactor are similar to those described in ASTM standard D-3907. The feedstock is added by means of a continuos feeder-pump, which is governed by a central control unit. A syringe positioned inside the pump and which can be heated delivers the feedstock to the reactor. The feeding system used is an " on column"-type injection system consisting of a percussor equipped with a needle or any other device which can penetrate the reactor at the rate and according to the intervals determined by the control unit. This injection system allows for high precision feeding of amounts as small as 0.1 ml. Alternatively the injection system can be based on a three-way valve with small dead volume, coupled to the feeder pump and controlled by the central unit. The feed portions in the different experiments can be varied over a range from 0.1 - 50.0 ml, although they would preferably move between 0.2 and 3.0 ml.

The feed is evaporated in the top part of the reactor, when passing through a stainless steel, quartz or ceramic cylinder, diameter 0.1 - 2.5 cm, preferably 0.5 - 2 cm, whose middle portion is hollow to allow for feed passage, the inner cylinder diameter being 0.5-2.0 mm. Several thermocouples fitted along the reactor walls measure and control reactor temperature, especially in the area of the catalyst bed. The reactor is heated electrically by means of several heating units similar to the ones described in the ASTM standard nr. D-3907.

The liquid reaction products and gases leave the reactor through a 3-way or multiport valve with a dead volume below 0.01 ml controlled by an analog or digital positioner, also governed by the central control unit. This valve distributes the liquid reaction products from the different tests programmed into the respective receivers and transfers the reaction gases to the analyzer system. In addition the valve can establish reactor communication with the atmosphere or with the ducts transporting the regeneration gases to the analyzer system. Thus an 8 -port valve, for example, can handle samples from 6 or 7 experiments. Optionally the valve can be programmed for differently spaced sampling from one and the same experiment, thus attending different reaction times.

The liquid product receiver system consists of pipes similar to the system described in ASTM standard D-3907, which are fitted within an isotherm system, either controlled by the central unit or by an independent device, and which maintains the receivers at a temperature between -5 and 50^{º}C during the different phases of the cycle: purge-reaction-purge-regeneration.

The reaction gases are collected in a container by means of water displacement or any other method, where the volume is controlled by sensors of any type, such as optical, capacitating, inductive and other sensors. Optionally this volume may remain uncontrolled.

The load loss in the catalyst bed is measured by means of direct observation with a manometer or preferably through the control unit as a function of the readings obtained from a pressure transducer.

Reaction gas analysis is done automatically through displacement from the receiver, and is controlled through the control unit when injecting the gases into a gas chromatograph or any other analytic system. The system furthermore allows for analysis of several samples of one and the same experiment, calculating the proportion and the total amount of gaseous products.

Once the reaction has been completed, the feed supply is interrupted instantly by switching off the feeder pump and making the percussor extract the needle from the reactor, or else the connection between the valve and the reactor is cut off. Simultaneously a pre-programmed inert gas flow is blown in and controlled. The purge time with inert gas may comprise 460 minutes and preferably 10 to 20 minutes. Purge temperatures may be equal or different from the reaction temperature, depending on the respective programming parameter.

Once the purge time has been completed, the inert gas flow is automatically switched off, and an air blast or any other oxidizing gas is blown into the reactor, at a previously programmed flow rate. Catalyst regeneration takes place at a temperature between 400 and 800^{º}C, preferably in the 550 - 700^{º}C range. The respective temperature is reached automatically and following a pre-programmed heating rate. Regeneration can be done with air, oxygen or a blend of the former two with water vapour.

During the regeneration phase, the combustion gases are conducted through a furnace equipped with a catalyst, which will accomplish complete oxidation of CO to CO₂. The CO₂ and H₂O of the combustion gases are analyzed by means of suitable techniques, such as IR, gas chromatography, etc. Gas chromatography is the method of choice, as it allows for simultaneous analysis of CO₂ and H₂O. Thus it becomes possible to obtain the H/C ratio of the coke in the catalyst.

The data obtained from reaction gas analysis, as well as combustion gas analysis are transmitted via port RS232 or any other means to the central control unit. Together with the data defining the experimental conditions and results in the computer unit, this information is used to build up a data base appropriate for application with the different computing and data retrieval programmes.

Once the programmed regeneration time has been completed, the system adjusts automatically to the reaction temperature programmed for the following test. The oxidizing gas inflow is interrupted and the reactor is filled with inert gas.

Following this sequential cycle it is possible to conduct between 2 and 20 tests without any interference or handling on the part of the operator. The system has been specially designed to handle, with one single catalyst charge, several experiments obeying different reaction conditions. For instance, reaction times between 10 and 300 seconds, preferably between 15 and 75 seconds, can be coped with, as well as, catalyst / feed ratios between 0.1 and 40.0 g/g, preferably between 1 and 20 g/g, and reaction temperatures between 400 and 700^{º}C, preferably between 480 and 650^{º}C. In addition, partial feed pressure can be modified by means of simultaneous input of an inert gas flow, allowing for variation over the range of 0.1 to 1 atmosphere, preferably between 0.3 and 1 atmosphere.

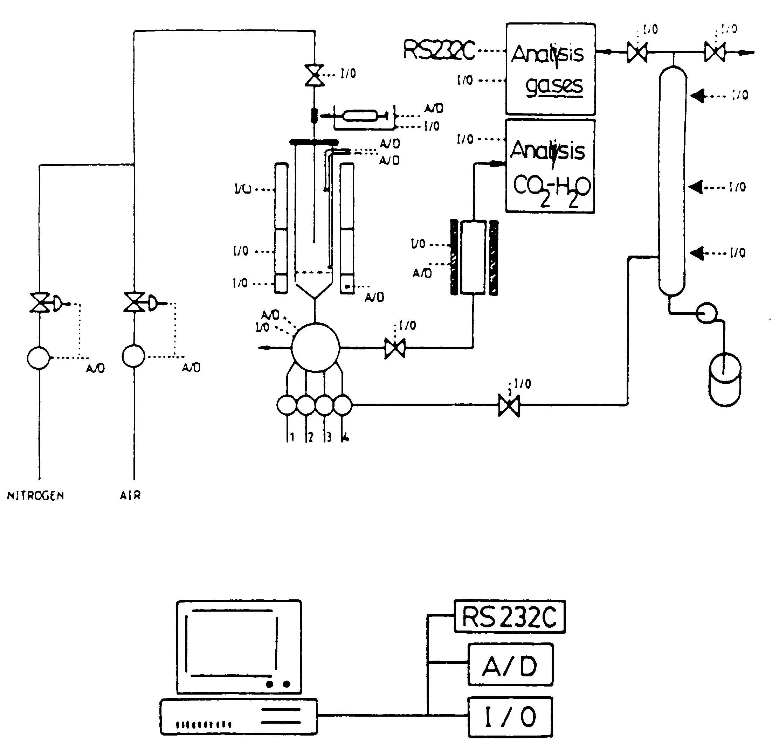

## Claims

1. A computerized unit for the study and evaluation of catalytic cracking catalyzers, specially designed for carrying out a series of continuous cyclic experiments under varying experimental conditions without operator assistance, the unit comprising:
- one single tubular reactor with a fixed or fluid catalytic bed, the dimensions of said catalytic bed varying in accordance with the amount of catalyst, including those described in astm standard D3907;
- at least one heating unit;
- a fuel supply system capable of feeding controlled programmed amounts of liquid gases or liquid/gas mixtures delivering liquid fuel by an injection system that includes a continuous fuel pump connected to an injection device which is introduced into the reactor when a percurssor is automatically activated at the beginning of the reaction and which exits the reactor quickly and automatically at the end of the reaction time;
- a product collection system by means of a more-than-three-way valve with a dead volume less than 0.01 ML allowing controlled collection of liquid products from different experiments in different samplers, transfer of gaseous products and purge thereof in the collection receptacle during regeneration allowing combustion gases to be sent to the analysis line, whereby several experiments obeying different reaction conditions are handled with one single charge of catalyst.

2. A unit in accordance with claim 1, wherein the injection device is a needle.

3. A unit in accordance with any of the preceding claims comprising a liquid injection system operated by a three-way valve with a dead volume of less than 0.01 ML controlled by a central control unit.

4. A unit in accordance with any of the preceding claims permitting fractioned collection of liquid and gaseous reaction products in the same experiment.

5. A unit in accordance with any of the preceding claims comprising a central control unit that automatically programs control of the system according to preprogrammed experimental conditions.

6. A unit in accordance with claim 4, wherein automatic collection by the central control unit of results of analysis of accumulated reaction, and point and cumulative analysis of regeneration gases, with instant generation of a data base for use in various calculation programs with representation of the results, are performed.

7. A unit in accordance with any of the preceding claims, operating within the following ranges of experimental conditions: fuel supply 0.1 - 50.0 ML; reaction temperature 400 - 700°C; liquid product collection temperature -50 to 50°C; reaction time 10 - 300 seconds; catalyst/feed ratio 0.1 - 40.0 G/G; fuel partial pressure 0.1 - 1.0 atmosphere.

## Patentansprüche

1. Computerisierte Einheit für das Studium und die Bewertung katalytischer Spaltkatalysatoren, insbesondere entworfen zum Durchführen einer Serie von fortlaufenden zyklischen Experimenten unter Variierung experimenteller Bedingungen ohne Assistenz des Betreibers, derart, daß die Einheit enthält:
einen einzigen röhrenförmigen Reaktor mit einem fixierten oder fluidförmigen katalytischen Bett, derart, daß die Abmessungen des katalytischen Betts in Übereinstimmung mit dem Umfang des Katalysators variieren, einschließlich denjenigen, die in dem astm-Standard D3907 beschrieben sind;
zumindest eine Heizeinheit;
ein Brennstoffzuführsystem, das in der Lage ist, gesteuerte programmierte Umfänge von flüssigen Gasen oder Flüssigkeits-/Gasmischungen zuzuführen, unter Abgabe flüssigen Brennstoffes durch ein Einspritzsystem, das eine kontinuierlich arbeitende Brennstoffpumpe enthält, die mit einer Einspritzeinrichtung verbunden ist, derart, daß dieses in den Reaktor dann eingeführt wird, wenn ein Vorgänger (percurssor) zu Beginn der Reaktion automatisch aktiviert wird, und das aus dem Reaktor schnell und automatisch am Ende der Reaktionszeit austritt;
ein Produktsammelsystem mittels eines mehr-als-Dreiwegventil mit einem Totvolumen von weniger als 0,01 ML, das eine gesteuerte Sammlung von flüssigen Produkten aus unterschiedlichen Experimenten mit unterschiedlichen Proben ermöglicht, sowie den Transfer der gasförmigen Produkte und deren Reinigung in dem Sammelelement während der Regenerierung, wodurch Verbrennungsgase an die Analyseleitung gesendet werden können und wodurch mehrere Experimente, die unterschiedlichen Reaktionsbedingungen unterliegen, mit einer einzigen Charge des Katalysators gehandhabt werden.

2. Einheit nach Anspruch 1, dadurch gekennzeichnet, daß die Einspritzeinrichtung eine Nadel ist.

3. Einheit nach einem der vorhergehenden Ansprüche, enthaltend ein Flüssigeinspritzsystem betrieben mit einem Dreiwegventil mit einem Totvolumen von weniger als 0,01 ML, gesteuert durch eine Zentralsteuereinheit.

4. Einheit in Übereinstimmung mit einem der vorhergehenden Ansprüche, derart, daß sie eine Sammlung in Bruchteilen der flüssigen und gasförmigen Reaktionsprodukte in demselben Experiment ermöglicht.

5. Einheit in Übereinstimmung mit einem der vorhergehenden Ansprüche, enthaltend eine Zentralsteuereinheit, die automatisch die Steuerung des Systems gemäß den vorprogrammierten Experimentbedingungen programmiert.

6. Einheit nach Anspruch 4, dadurch gekennzeichnet, daß das automatische Sammeln der Analyseergebnisse der akkumulierten Reaktion durch die Zentralsteuereinheit durchgeführt wird, sowie eine Punkt- und kumulative Analyse der Regenerierungsgase mit momentaner Erzeugung einer Datenbasis für den Einsatz in zahlreichen Berechnungsprogrammen unter Darstellung der Ergebnisse.

7. Einheit nach einem der vorhergehenden Ansprüche, dadurch gekennzeichnet, daß sie mit den folgenden Bereichen der Experimentierbedingungen betrieben wird: Benzinzufuhr 0,1 - 50,0 ML; Reaktionstemperatur 400 - 700°C; Flüssigkeitsprodukt-Sammeltemperatur -50 bis 50°C; Reaktionszeit 10 - 300 Sekunden; Katalysator/Zuführverhältnis 0,1 - 40,0 G/G; Brennstoffpartialdruck 0,1 - 1,0 Atmosphären.

## Revendications

1. Un ensemble informatisé pour l'étude et l'évaluation de catalyseurs de craquage catalytique, spécialement conçu pour l'exécution d'une série d'expériences cycliques en continu dans des conditions expérimentales variables sans intervention d'un opérateur, l'ensemble comprenant :
un réacteur tubulaire individuel à lit catalytique fixe ou fluide, les dimensions dudit lit catalytique variant en fonction de la quantité de catalyseur, y compris ceux décrits dans la norme ASTM D3907 ;
au moins un ensemble de chauffage ;
un système d'alimentation en combustible capable de fournir des quantités programmées contrôlées de gaz liquéfiés ou de mélanges gaz-liquide, de délivrer du combustible liquide par un système d'injection qui comporte une pompe à combustible continue reliée à un dispositif d'injection qui est introduit dans le réacteur lorsqu'un pointeau est automatiquement activé au début de la réaction et qui quitte le réacteur rapidement et automatiquement à la fin du temps de réaction ;
un système collecteur de produits au moyen d'un distributeur à plus de trois voies d'un volume résiduel de moins de 0,01 millilitre permettant le recueil contrôlé de produits liquides provenant de différentes expériences dans différents échantillonneurs, le transfert de produits gazeux et leur purge dans le réceptacle collecteur pendant la régénération permettant aux gaz de combustion d'être envoyés à la canalisation d'analyse, en permettant ainsi à plusieurs expériences obéissant à des conditions de réaction différentes d'être menées avec une même charge de catalyseur.

2. Un ensemble selon la revendication 1, dans lequel le dispositif d'injection est une aiguille.

3. Un ensemble selon l'une quelconque des revendications précédentes comprenant un système d'injection de liquide actionné par un distributeur à trois voies présentant un volume résiduel de moins de 0,01 millilitre commandé par une unité de commande centrale.

4. Un ensemble selon l'une quelconque des revendications précédentes permettant le recueil fractionné de produits de réaction liquides et gazeux dans la même expérience.

5. Un ensemble selon l'une quelconque des revendications précédentes comprenant une unité de commande centrale qui programme automatiquement le pilotage du système en fonction de conditions expérimentales préprogrammées.

6. Un ensemble selon la revendication 4, dans lequel sont effectués le recueil automatique par l'unité de commande centrale de résultats d'analyse de réaction cumulée, et l'analyse ponctuelle et cumulative de gaz de régénération, avec génération immédiate d'une base de données destinée à être utilisée dans divers programmes de calcul avec représentation des résultats.

7. Un ensemble selon l'une quelconque des revendications précédentes, travaillant dans les domaines de conditions expérimentales suivants : alimentation en combustible de 0,1 à 50,0 millilitres ; température de réaction de 400 à 700°C ; température de recueil de produits liquides de -50 à +50°C ; temps de réaction de 10 à 300 secondes ; rapport catalyseur/produits d'alimentation de 0,1 à 40,0 g/g ; pression partielle du combustible de 0,1-1,0 atmosphère.
